Europäisches Patentamt

European Patent Office

Office européen des brevets

(11) Veröffentlichungsnummer: **0 411 316 A1**

# EUROPÄISCHE PATENTANMELDUNG

(21) Anmeldenummer: **90112216.8**

(51) Int. Cl.⁵: **B62B 3/10**

(22) Anmeldetag: **27.06.90**

(30) Priorität: 26.07.89 DE 8909059 U
21.11.89 DE 8913718 U

(43) Veröffentlichungstag der Anmeldung:
**06.02.91 Patentblatt 91/06**

(84) Benannte Vertragsstaaten:
**DE ES FR GB IT**

(71) Anmelder: **Wanzl GmbH & Co.
Entwicklungs-KG-KG
Postfach 11 29**

**D-8874 Leipheim(DE)**

(72) Erfinder: **Pech, Raimund
Weissenhorner Strasse 9
D-8870 Günzburg(DE)**
Erfinder: **Eichele, Hermann
Jakob-Wehe-Strasse 12
D-8874 Leipheim(DE)**
Erfinder: **Wanzl, Rudolf
Sonnenweg 8
D-8874 Leipheim(DE)**

(54) **Klappe.**

(57) Die Erfindung betrifft eine Klappe (1) zum Verschließen des rückwärtig offenen Endes eines Einkaufswagenkorbes (24). Die Klappe (1) ist mit wenigstens zwei aus Kunststoff gefertigten Scharnieren (7) ausgestattet. Die Scharniere (7) sind mit je einer Nut ausgestattet, mit deren Hilfe die Klappe (1) auf die Querstange (25) schnappschlüssig aufsetzbar ist.

Fig. 1

EP 0 411 316 A1

# KLAPPE

Die Erfindung betrifft eine Klappe zum Verschließen des rückwärtigen offenen Endes eines Einkaufswagenkorbes, dessen Seitenwände im oberen rückwärtigen Bereich durch eine Querstange verbunden sind und die Klappe mit wenigstens zwei aus elastischem Kunststoff gefertigten Scharnieren ausgestattet ist, die zum Anlenken an die Querstange bestimmt sind, wobei jedes Scharnier eine Nut zum schnappschlüssigen Aufsetzen der Klappe auf die Querstange besitzt und jedes Scharnier gegen Lösen gesichert, auf einen Teil der Klappe aufsetzbar ist.

Klappen dieser Art sind bei Einkaufswagenkörben erforderlich, damit das platzsparende Ineinanderschieben von Einkaufswagen ermöglicht wird. Diese Klappen gliedern sich auf in sog. "Einfachklappen", die lediglich als ebene Drahtgitterwand gestaltet sind und in sog. "Kindersitzklappen", bei welchen zwei Drahtgitterwände an ihren unteren Enden gelenkig verbunden sind und etwa auf halber Höhe eine Sitzplatte aufweisen, die mit beiden Drahtgitterwänden gelenkig und schiebebeweglich verbunden ist. Durch bekanntes Auffalten läßt sich der Kindersitz benützen.

Zum nächstliegenden Stand der Technik zählen Klappen, die in der DE 30 07 528 A1 näher beschrieben sind. Diese Klappen weisen Scharniere auf, mit deren Hilfe u.a. die Montage der Klappen an der Querstange von Einkaufswagenkörben vereinfacht werden soll. Zu diesem Zweck weist jedes Scharnier ein Klappentragstück auf, das an der Klappe verdrehsicher befestigt wird. Ferner gehört zu jedem Scharnier ein Verschlußstück, mit dessen Hilfe sich jedes Scharnier und damit die Klappe an der Querstange eines Einkaufswagenkorbes befestigen läßt. Ein entscheidender Nachteil dieser Klappen ist darin erkennbar, daß die Klappen an der Querstange mit Spiel zum Boden des Einkaufswagenkorbes montiert werden müssen, da sie sich sonst nicht verschwenken lassen. Dieses Spiel beträgt in der Regel etwa 5mm. Das Befestigen einer Klappe an einer Querstange eines Einkaufswagenkorbes erfolgt derart, daß die mit Klappentragstücken ausgestattete Klappe mit der Nut der Klappentragstücke voraus, also umgekehrt und von oben her schnappschlüssig auf die Querstange aufgesetzt wird. Anschließend muß die Klappe um 90° so geschwenkt werden, daß sie mit ihrer unteren Begrenzung am Körper der die Klappe montierenden Person anliegt. Sodann wird jedes Verschlußstück aufgesetzt und in die schnappschlüssige Position mit dem jeweiligen Klappentragstück gedrückt oder geschlagen. Dabei dient der Körper der Montageperson gewissermaßen als Anschlag. Wollte man hingegen die Verschlußstücke dann aufsetzen, wenn sich die Klappe in Gebrauchslage befindet, so würden beim Aufschlagen der Verschlußstücke auf die Klappentragstücke, bedingt durch das vorhin erwähnte Spiel, die Klappentragstücke und damit die Klappe von der Querstange aus um dieses Spiel nach unten rutschen, die Querstange läge nicht mehr satt in den Nuten der Klappentragstücke und die Verschlußstükke könnten nicht mehr aufgesetzt werden. Es hat sich herausgestellt, daß die vorgeschlagene Lösung immer noch zu viel Montagezeit beansprucht. Bei Massenartikeln, wie dies Einkaufswagen sind, können jedoch hohe Montagezeiten aus Kostengründen nicht akzeptiert werden.

Die Aufgabe der Erfindung besteht darin, die an einer Klappe der gattungsgemäßen Art vorgesehenen Scharniere so zu verändern, daß im Vergleich zu den in der DE-30 07 528 A1 beschriebenen Scharnieren sowohl eine wesentliche Reduzierung des für das Anbringen der Klappe an der Querstange eines Einkaufswagenkorbes erforderlichen Zeitaufwandes, als auch eine Verringerung der Herstellkosten für die Scharniere erzielt wird.

Im Rahmen einer Ausgestaltung der Erfindung soll auch eine Reduzierung jenes Lärms erreicht werden, der gewöhnlich dann entsteht, wenn man mit einem Einkaufswagen fährt, dessen Klappe als Kindersitzklappe ausgebildet ist und deren beide Drahtgitterwände bei Nichtgebrauch des Kindersitzes aneinanderliegen.

Die primär gestellte Aufgabe wird durch die kennzeichnenden Merkmale des Anspruches 1 gelöst.

Die Lösung der im Rahmen einer Ausgestaltung gestellten Aufgabe wird durch die kennzeichnenden Merkmale des Anspruches 13 genannt.

Als vorteilhaft im Sinne der Erfindung erweist sich, daß unabhängig davon, wie die Klappe gestaltet ist, die Art der Montage der Klappe an der Querstange eines Einkaufswagens derart vereinfacht ist, daß mit dem Aufsetzvorgang auch nahezu der gesamte Vorgang des Befestigens und Sicherns der Klappe an der Querstange einhergeht. Dadurch, daß die Öffnung der Nut eines jeden Scharnieres zur unteren Begrenzung der Klappe gerichtet ist, kann die Klappe sofort in ihrer späteren Gebrauchslage auf die Querstange aufgesetzt werden. Ein umgekehrtes Aufsetzen, anschließendes Schwenken und Sichern sowie das letztendliche Schwenken in die Gebrauchslage, wie dies bei der vorgeschlagenen Lösung der DE-30 07 528 A1 noch erforderlich war, entfällt. Die Montageperson braucht jetzt nur noch die mit den Scharnieren bestückte Klappe mit einer Hand zu nehmen, diese mit den Nuten der Scharniere auf die Querstange zu setzen und durch einen leichten, von oben auf die Scharniere wirkenden Schlag auf der Querstange zu sichern. Das Sichern gegen Abnehmen erfolgt durch den federnden Anschlag eines jeden Scharnieres, der beim Aufsetzvorgang durch die Querstange zur Seite gedrückt wird und dann, wenn die Querstange satt in jeder Nut der Scharniere liegt, hinter dieser einrastet und sich sofort dann sperrend in den Weg stellt, wenn versucht wird, die Klappe von der Querstange abzunehmen.

Als vorteilhaft erweist sich ferner, daß jedes Scharnier einstückig gestaltet ist, was sich kostenminimierend auf Herstellung, Lagerhaltung und Montagezeit auswirkt.

Schließlich kann jedes Scharnier in vorteilhafter Weise als Anlagefläche für die ausklappbare Drahtgitterwand einer als Kindersitzklappe gestalteten Klappe verwendet werden. Dadurch, daß in Nichtgebrauch einer derart gestalteten Klappe nicht mehr ausschließlich metallische Flächen, sondern metallische Flächen gegen Kunststoffflächen schlagen, wird eine spürbare Reduzierung des entstehenden Lärms erzielt.

Bei einem ersten Ausführungsbeispiel werden die Scharniere auf den geraden Abschnitt der die Seitenwände verbindenden Querstange gesetzt, wobei die Scharniere an der Klappe zwischen je zwei Drähte verschiebesicher eingefügt sind.

Bei einem zweiten Ausführungsbeispiel werden die Scharniere auf die gebogenen Eckbereiche der Querstange aufgesetzt, so daß eine verschiebesichere Arretierung bereits durch die Querstange selbst erfolgt und die vorab genannten Drähte an der Klappe überflüssig machen.

Die Erfindung wird anhand zweier Ausführungsbeispiele näher erläutert. Es zeigt

Fig. 1 eine an einem Einkaufswagenkorb montierte, aus einer Drahtgitterwand bestehende Klappe;

Fig. 2 eine an einem Einkaufswagenkorb montierte, als Kindersitzklappe gestaltete Klappe;

Fig. 3 ein Scharnier in räumlicher Darstellung;

Fig. 4 und 5 die Querstange eines Einkaufswagenkorbes mit einem Scharnier gemäß Fig. 3 und einem Teil der Klappe in Seiten- und in Vorderansicht;

Fig. 5 ein weiteres Scharnier in räumlicher Lage;

Fig. 6 das eben genannte Scharnier im Schnitt sowie

Fig. 7 bruchstückhaft eine auf eine Querstange aufgesetzte Klappe mit zwei Scharnieren gemäß Fig. 5.

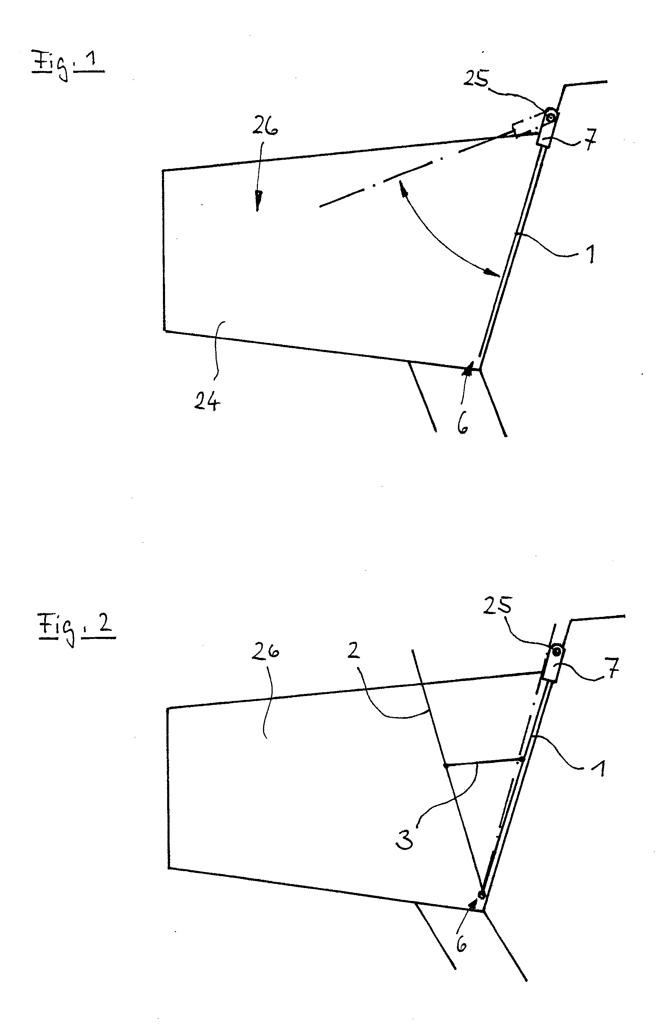

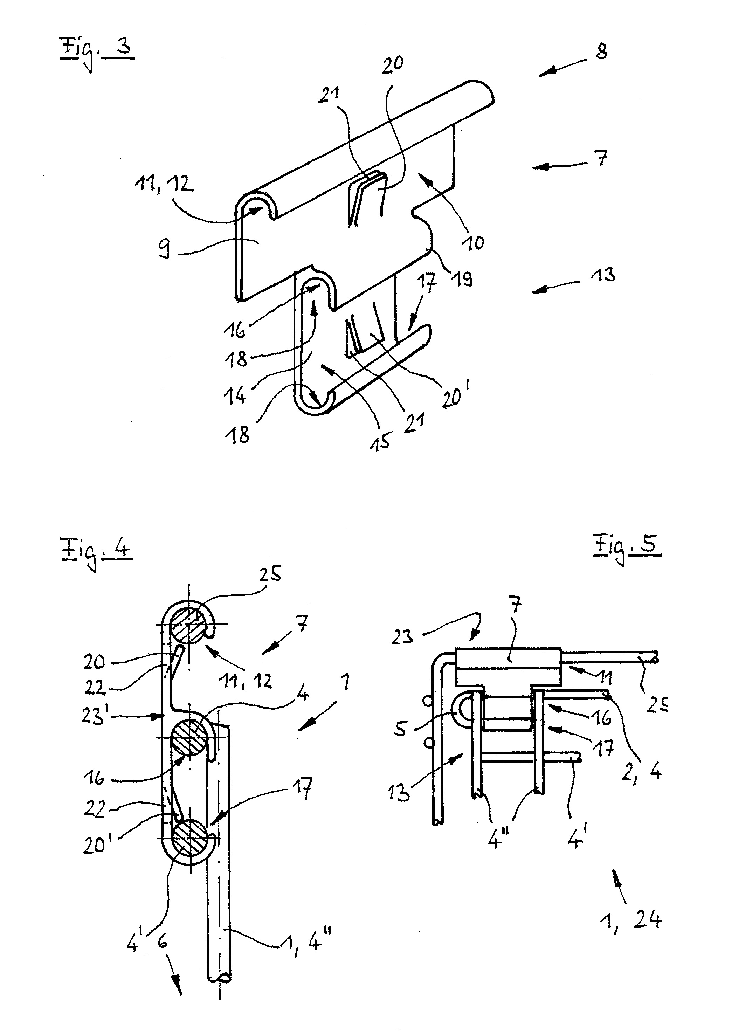

In den Figuren 1 und 2 ist in schematischer Weise die Anordnung zweier verschieden gestalteter Klappen 1 an je einem Einkaufswagenkorb 24 dargestellt. Aus Vereinfachungsgründen ist der restliche Umriss des dazu gehörenden Einkaufswagens weggelassen. Jede Klappe 1 ist mit wenigstens zwei Scharnieren 7 ausgestattet. Die Scharniere 7 sind sowohl ortsfest an jeder Klappe 1, als auch drehbeweglich an der waagrechten Querstange 25 der Einkaufswagenkörbe 24 befestigt. Wie in Fig. 1 strichpunktiert dargestellt, lassen sich die Klappen 1 in bekannter Weise um die Querstange 25 nach oben in das Korbinnere verschwenken, damit ein Raum für einen weiteren einzuschiebenden Einkaufswagen geschaffen wird. Die Querstange 25 verbindet die beiden Korbseitenwände 26. Die in Fig. 2 als Kindersitzklappe gestaltete Klappe 1 ist in jener Lage gezeichnet, in der sie ein Kleinkind in sitzender Stellung aufzunehmen vermag. Die rückseitige Drahtgitterwand 2 der beiden Drahtgitterwände ist in bekannter Weise ausgeklappt und der Sitz 3 befindet sich in seiner Gebrauchslage. Strichpunktiert ist diese Klappe 1 in Nichtgebrauchslage gezeichnet. Man erkennt in der Zeichnung, daß die ausklappbare Drahtgitterwand 2 an den wenigstens zwei Scharnieren 7 anliegt.

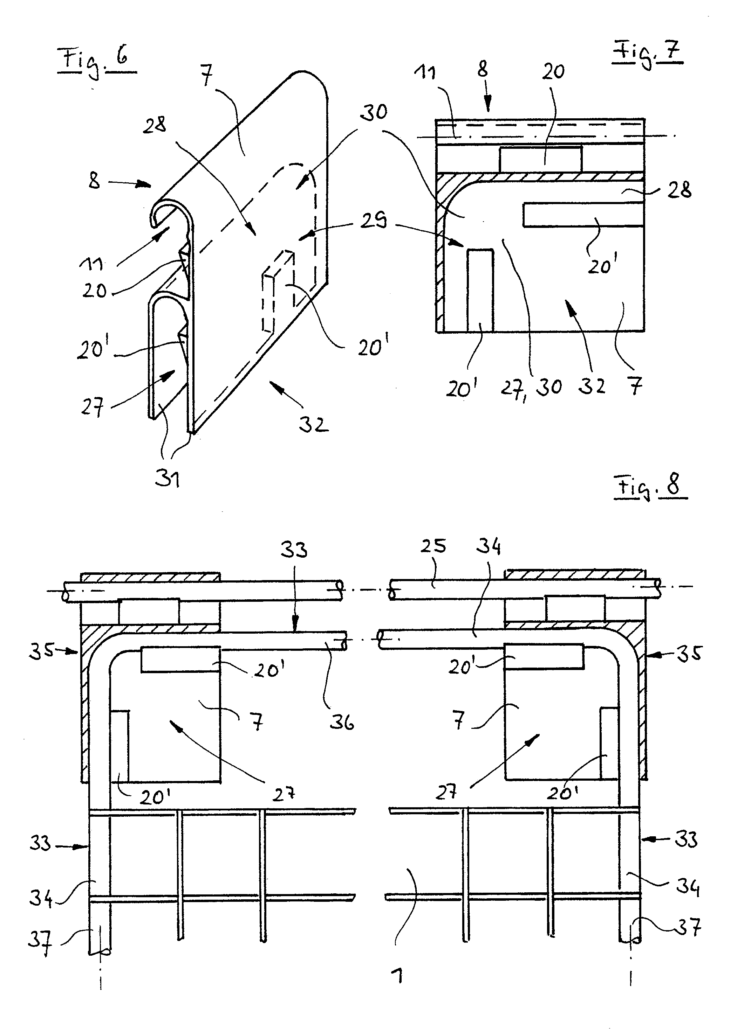

Fig. 3 zeigt ein Scharnier 7 in räumlicher Lage. Von vorne betrachtet erinnern die Umrisse des Scharniers 7 an ein "T". Der obere Bereich 8 weist einen ebenen Wandabschnitt 9 auf. An die Innenwand 10 des Wandabschnittes 9 schließt nach oben hin eine Nut 11 an, die in Gebrauchslage des Scharnieres 7 waagrecht angeordnet ist. Der Querschnitt der Nut 11 ist kreisabschnittförmig gestaltet, wobei der Kreisabschnitt einen Winkel von etwas mehr als 180° einschließt. Dadurch läßt sich, wie später noch beschrieben werden wird, das Scharnier 7 auf einen Stab mit gleichem Durchmesser schnappschlüssig aufsetzen. Die Öffnung 12 der Nut 11 zeigt in Gebrauchslage des Scharniers 7 nach unten. An den oberen Bereich 8 schließt ein unterer Bereich 13 an. Der untere Bereich 13 weist ebenfalls einen ebenen Wandabschnitt 14 auf, an dessen Innenwand 15 zwei mit ihren Öffnungen 18 zueinander gerichtete waagrechte Nuten 16, 17 mit kreisabschnittförmigem Querschnitt angeordnet sind. Der Kreisabschnitt der mittig liegenden Nut 16 schließt einen Winkel von 180° ein, wobei der freie Schenkel 19 der Nut 16 nach unten über den waagrecht gemessenen Durchmesser etwas verlängert ist. Die unten angeordnete Nut 17 ist im Querschnitt so gestaltet, wie die obere Nut 11. An den Innenwänden 10, 15 des oberen und unteren Bereiches 8, 13 sind federnde Anschläge 20, 20' in Form von Zungen vorgesehen. Das freie Ende 21 des oberen Anschlages 20 ist zur Öffnung 12 der oben angeordneten Nut 11 gerichtet, während das freie Ende 21 des unteren Anschlages 20' zur Öffnung 18 der unten angeordneten Nut 17 zeigt. Wie in Fig. 4 noch näher beschrieben, übernehmen die Anschläge 20, 20' eine zusätzliche Sicherungsfunktion, damit sich die Klappe 1 weder von der Querstange 25, noch jedes Scharnier 7 ungewollt von der Klappe 1 löst. Der obere Bereich 8 des Scharniers 7 ist breiter, als dessen unterer Bereich 13. Durch zentrische Anordnung der Bereiche 8 und 13, erhält man Scharniere, die, obwohl sie gleich sind, als rechte und linke Bauteile verwendbar sind.

Fig. 4 zeigt in Seitenansicht ein Scharnier 7, das an einer Klappe 1 befestigt ist und das, die Klappe 1 tragend, auf die Querstange 25 eines Einkaufswagenkorbes 24 aufgesetzt ist. Das Scharnier 7 ist in Ansicht, während Teile der Klappe 1 und die Querstange 25 im Schnitt dargestellt sind. Die Nuten 16, 17 sind zur Aufnahme von zwei waagrecht angeordneten Stäben oder Stababschnitten 4, 4' der Klappe 1 vorgesehen. Die Stäbe 4, 4' sind satt in die Nuten 16, 17 eingefügt. Der untere Anschlag 20' verhindert, daß das Scharnier 7 von der Klappe 1 abgenommen werden kann. In der Zeichnung ist auch ein senkrechter Stab 4" dargestellt, der die beiden Stäbe oder Stababschnitte 4, 4' verbindet. In der oben angeordneten Nut 11 ist die Querstange 25 eines Einkaufswagenkorbes 24 satt eingefügt. Auch hier verhindert der obere Anschlag 20, daß sich das Scharnier 7 und damit die Klappe 1 von der Querstange 25 löst, oder von dieser abgenommen werden kann. An der Rückwand 23 ist bevorzugt eine rechteckförmige Vertiefung 23' vorgesehen, die zur Aufnahme von kartenartigen Werbeträgern verwendet werden kann. Die Montage der Scharniere 7 an der Klappe 1 und die schwenkbare Befestigung der Klappe 1 an der Querstange 25 erfolgt derart, daß zuerst jedes Scharnier 7 an der Klappe 1 befestigt wird. Dazu wird jedes Scharnier 7 in schräger Lage mit der mittleren Nut 16 auf den oberen Stab 4 der Klappe 1 aufgesetzt und ausgehend von der Zeichnung entgegen dem Uhrzeigersinn gedreht und mit einem Hammer gegen den unteren Stab 4' der Klappe 1 geschlagen, so daß in schnappschlüssiger Weise die unten angeordnete Nut 17 den unteren Stab 4' der Klappe 1 aufnimmt. Bei diesem Vorgang weicht der untere Anschlag 20' zurück und federt dann wieder in seine Ausgangslage, sobald der untere Stab 4' satt in der Nut 17 liegt. Die derart mit Scharnieren 7 ausgestattete Klappe 1 wird nun -bereits die spätere Gebrauchslage in etwa einnehmend von oben her auf die Querstange 25 zubewegt, wobei die zur unteren Begrenzung 6, siehe Fig. 1 und 2, der Klappe 1 gerichtete Öffnung 12 der oben angeordneten Nut 11 sich genau über der Querstange 25 befindet. Die Scharniere 7 und damit die Klappe 1 wird nun mittels der Nuten 11 auf die Querstange 25 aufgesetzt bzw. erforderlichenfalls mit einem Hammer auf die Querstange 25 aufgeschlagen. Bei diesem Vorgang weichen die oberen Anschläge 20 der Scharniere 7 aus und federn in ihre Ausgangslage dann zurück, wenn die Querstange 25 satt in jeder Nut 11 sitzt. Die Anschläge 20 verhindern, daß sich die Scharniere 7 von selbst oder mißbräuchlich von der Querstange 25 lösen. Damit die federnden Anschläge 20, 20' ausweichen können, sind an den Innenwänden 10, 15 Öffnungen 22 oder Vertiefungen vorgesehen, die die Anschläge 20, 20' bei ihrem Ausweichvorgang vorübergehend aufnehmen.

Fig. 5 zeigt einen Teil der Klappe 1 und einen Teil des Einkaufswagenkorbes 24 mit einem Abschnitt der Querstange 25 in montierter Lage. Die Querstange 25 ist Teil eines rechteckigen Rahmens, der das rückwärtig offene Ende eines Einkaufswagenkorbes 24 abschließt. An der linken oberen Seite der Klappe 1 befindet sich ein Scharnier 7. Das Scharnier 7 ist mit seiner Nut 11 auf die Querstange 25 aufgesetzt. In den Nuten 16, 17 befinden sich je ein Stababschnitt 4, 4' eines quer zur Klappe 1 verlaufenden, am Ende gekrümmten Stabes 5. Zu beiden Seiten des unteren Bereiches 13 des Scharnieres 7 befinden sich senkrecht angeordnete Stäbe 4", die der Klappe 7 angehören und die je einen seitlichen Anschlag für das Scharnier 7 bilden, so daß sich das Scharnier 7 nicht entlang der Stababschnitte 4, 4' verschieben läßt. Die in der Zeichnungsebene befindliche Rückwand 23 des Scharniers 7, vergleiche auch die Figuren 2 und 4, bildet eine Anlagefläche für die ausklappbare Drahtgitterwand 2 dann, wenn die Klappe 1 als Kindersitzklappe gestaltet ist.

Ein weiteres Scharnier 7 zeigen die Figuren 6 und 7. Dieses ebenfalls räumlich und im Schnitt gezeichnete Scharnier 7 besitzt eine im wesentlichen quadratische oder rechteckige Grundform. In bekannter Weise weist das Scharnier 7 im oberen Bereich 8 eine Nut 11 auf, mit deren Hilfe das Scharnier 7 schnappschlüssig auf eine Querstange 25, welche die Korbseitenwände 26 des Einkaufswagenkorbes 24 verbindet, aufgesetzt wird. Ein nahe der Nut 11 befindlicher Anschlag 20 verhindert das Lösen des Scharniers 7 von der Querstange 25. Unterhalb der Nut 11 ist ein Raum 27 zur verdrehsicheren Aufnahme eines Eckbereiches 35 der Klappe 1 vorgesehen. Damit dies möglich ist, gliedert sich der Raum 27 im wesentlichen in zwei Abschnitte 28, 29 auf, die bevorzugt rechtwinklig, oder nahezu rechtwinklig zueinander angeordnet sind. Die beiden Abschnitte 28, 29 gehen über einen Krümmungsbereich 30 homogen ineinander über. Nahe der Abschnitte 28, 29 sind je ein an sich bekannter Anschlag 20' vorgesehen, welche zusammen mit der Wandung des Raumes 27 verhindern, daß sich ein auf einen Eckbereich 35 der Klappe 1 aufgesetztes Scharnier 7 unbeabsichtigt löst. Der Raum 27 und damit die Abschnitte 28, 29 sind durch zwei Wände 31 gebildet, die im Abstand parallel zueinander angeordnet, an einer Seite offen und an der gegenüberliegenden Seite miteinander verbunden sind, so daß eine Tasche 32 mit zwei offenen Seiten (seitlich und unten) gebildet ist. An den Innenflächen der Wände 31 befinden sich die Anschläge 20', die niedriger sind, als die lichte Weite der beiden Wände 31.

Fig. 5 zeigt andeutungsweise eine Klappe 1, die mittels zweier Scharniere 7 auf eine Querstange 25 aufgesetzt ist. Die äußere Begrenzung 33 der Klappe 1 ist durch einen bevorzugt umlaufenden Draht 34 gebildet. Die innerhalb des umlaufenden Drahtes 34 befindliche Fläche der Klappe 1 kann entsprechend bekannter Ausführungsbeispiele bevorzugt als Gitterkonstruktion unterschiedlich gestaltet sein. In der Zeichnung sind die beiden oberen Eckbereiche 35 der Klappe 1 erkennbar, die durch je einen waagrechten und je einen nach unten führenden Drahtabschnitt 36, 37 des umlaufenden Drahtes 34 gebildet sind und die sich in je einem Raum 27 der Scharniere 7, durch die Anschläge 20' gesichert, befinden. Die Scharniere 7 lassen sich bevorzugt unter einem Winkel von 45°, also über Eck, schnappschlüssig auf die Eckbereiche 35 der Klappe 1 aufsetzen.

Wie bereits in Fig. 2 erwähnt, liegt die ausklappbare Drahtgitterwand 2 ebenfalls an den zwei Scharnieren 7 an.

## Ansprüche

1. Klappe (1) zum Verschließen des rückwärtig offenen Endes eines Einkaufswagenkorbes, dessen Seitenwände (26) im oberen rückwärtigen Bereich durch eine Querstange (25) verbunden sind und die Klappe (1) mit wenigstens zwei aus elastischem Kunststoff gefertigten Scharnieren (7) ausgestattet ist, die zum Anlenken an die Querstange (25) bestimmt sind, wobei jedes Scharnier (7) eine Nut (11) zum schnappschlüssigen Aufsetzen der Klappe (1) auf die Querstange (25) aufweist und jedes Scharnier (7) gegen Lösen gesichert, auf einen Teil der Klappe (1) aufsetzbar ist, dadurch gekennzeichnet, daß die Öffnung (12) einer jeden Nut (11) zur unteren Begrenzung (6) der Klappe (1) gerichtet ist, daß an jedem Scharnier (7) nahe der Nut (11) ein federnder Anschlag (20) angeformt ist, dessen freies Ende (21) zur Öffnung (12) der Nut (11) weist und daß die Scharniere (7) einstückig gestaltet sind.

2. Klappe nach Anspruch 1, dadurch gekennzeichnet, daß unterhalb der Nut (11) eine Nut (16) und eine Nut (17) zur Aufnahme von Stäben (4, 4'), die der Klappe (1) angehören, vorgesehen sind.

3. Klappe nach einem der Ansprüche 1 oder 2, dadurch gekennzeichnet, daß im Querschnitt betrachtet der Kreisabschnitt der Nut (16) einen Winkel von 180° und der Kreisabschnitt der Nut (17) einen Winkel größer 180° einschließt.

4. Klappe nach einem der Ansprüche 1 bis 3, dadurch gekennzeichnet, daß nahe der Nut (17) ein federnder Anschlag (20') angeformt ist, dessen freies Ende (21) zur Öffnung (18) der Nut (17) gerichtet ist.

5. Klappe nach einem der Ansprüche 1 bis 4, dadurch ge kennzeichnet, daß die Scharniere (7) Vertiefungen oder Öffnungen (22) zur Aufnahme der Anschläge (20, 20') aufweisen.

6. Klappe nach einem der Ansprüche 1 bis 5, dadurch gekennzeichnet, daß die Scharniere (7) seitlich von senkrechten, der Klappe (1) angehörenden Stäben (4'') begrenzt sind.

7. Klappe nach einem der Ansprüche 1 bis 6, dadurch gekennzeichnet, daß der obere Bereich (8) eines jeden Scharnieres (7) breiter ist, als der untere Bereich (13).

8. Klappe nach einem der Ansprüche 1 bis 7, dadurch gekennzeichnet, daß unterhalb der Nut (11) ein Raum (27) vorgesehen ist, der zwei winklig angeordnete Abschnitte (28, 29) aufweist, die zur Aufnahme eines der beiden oberen Eckbereiche (35) der Klappe (1) vorgesehen sind.

9. Klappe nach einem der Ansprüche 1 bis 8, dadurch gekennzeichnet, daß die Abschnitte (28, 29) durch einen Krümmungsbereich (30) miteinander verbunden sind.

10. Klappe nach einem der Ansprüche 1 bis 9, dadurch gekennzeichnet, daß der Raum (27) durch zwei Wände (31) gebildet ist, die in einem Abstand angeordnet und die Wände (31) an zwei angrenzenden Seiten miteinander verbunden sind.

11. Klappe nach einem der Ansprüche 1 bis 10, dadurch gekennzeichnet, daß gegenüber dem nach unten gerichteten Abschnitt (29) des Raumes (27) ein Anschlag (20') vorgesehen ist.

12. Klappe nach einem der Ansprüche 1 bis 11, dadurch gekennzeichnet, daß die oberen Eckbereiche (35) Teil eines die äußere Begrenzung (33) der Klappe (1) bildenden umlaufenden Drahtes (34) sind.

13. Klappe nach einem der Ansprüche 1 bis 12, dadurch gekennzeichnet, daß die Rückwand (23) eines jeden Scharnieres (7) als Anlagefläche für die ausklappbare Drahtgitterwand (2) einer als Kindersitzklappe gestalteten Klappe (1) vorgesehen ist.

14. Klappe nach einem der Ansprüche 1 bis 13, dadurch gekennzeichnet, daß an der Rückwand (23) eine Vertiefung (23') zur Aufnahme eines Werbeträgers vorgesehen ist.

Fig. 1

Fig. 2

6

EP 0 411 316 A1

Fig. 3

Fig. 4

Fig. 5

Fig. 6

Fig. 7

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 007 528 (WANZL) <br> * Seite 5, Zeile 6 - Seite 8, Zeile 5; Figuren * <br> — — — | 1 | B 62 B 3/10 |
| P,A | EP-A-0 364 873 (WANZL) <br> * Spalte 2, Zeile 7 - Spalte 3, Zeile 38; Figuren * <br> — — — | 1 | |
| A | US-A-3 287 841 (SPRAGG) <br> * Anspruch 1; Figuren * <br> — — — — — | 1 | |

|  | RECHERCHIERTE SACHGEBIETE (Int. Cl.5) |
|---|---|
|  | B 62 B |

Der vorliegende Recherchenbericht wurde für alle Patentansprüche erstellt

| Recherchenort | Abschlußdatum der Recherche | Prüfer |
|---|---|---|
| Den Haag | 06 Dezember 90 | VANNESTE M.A.R. |